# EUROPÄISCHE PATENTSCHRIFT

(11) **EP 3 801 033 B1**
(45) Veröffentlichungstag und Bekanntmachung des Hinweises auf die Patenterteilung: **29.06.2022**
(21) Anmeldenummer: 19730253.2
(22) Anmeldetag: 31.05.2019
(51) Int. Cl.: A21C 11/00, A21C 11/12

(54) **VERFAHREN ZUR FORMUNG VON RINGEN, INSBESONDERE TEIGRINGE, AUS TEIG ODER ANDEREN MASSEN**
METHOD FOR FORMING RINGS, MORE PARTICULARLY DOUGH RINGS, FROM DOUGH OR OTHER MASSES
PROCÉDÉ DE MOULAGE D'ANNEAUX, EN PARTICULIER D'ANNEAUX DE PÂTE, EN PÂTE OU AUTRES MASSES

(30) Priorität: 06.06.2018 AT 504542018
(43) Veröffentlichungstag der Anmeldung: 14.04.2021
(73) Patentinhaber: KÖNIG MASCHINEN GESELLSCHAFT M.B.H., 8045 Graz (AT)
(72) Erfinder: STELZER, Hannes, 8502 Lannach (AT); STAUFER, Wolfgang, 1020 Wien (AT); RAUCH, Eduard, 8321 St. Margarethen (AT); ROSSMANN, Florian, 8431 Gralla (AT)
(74) Vertreter: Wildhack & Jellinek
(86) Internationale Anmeldenummer: PCT/AT2019/060182
(87) Internationale Veröffentlichungsnummer: WO 2019/232562

(56) Entgegenhaltungen:
- DE-A1-102013 104 716
- US-A- 1 236 620
- US-A- 2 612 853
- US-A1- 2012 207 899

## Beschreibung

Die Erfindung betrifft ein Verfahren zur Formung von Ringen, Doughnuts, Bagels, Brandteigringe, Zimtringe und anderen sowie eine Formvorrichtung zur Formung von Ringen, Doughnuts, Bagels, Brandteigringe, Zimtringe und anderen gemäß dem Oberbegriff des Patentanspruchs 6.

Aus dem Stand der Technik sind verschiedene Verfahren und Vorrichtungen zur Formung von Ringen bekannt, bei denen an einer Vielzahl von Bearbeitungsstationen in einzelnen Teilschritten Teigstücke verformt und dann das für Ringe charakteristische Kernloch ausgestanzt wird. Bei den aus dem Stand der Technik bekannten Vorrichtungen werden Teigstücke entlang eines Transportbandes bewegt und von einer Bearbeitungsstation zur anderen transportiert. An den einzelnen Bearbeitungsstationen wird dem Teigstück schrittweise eine kreisrunde Form aufgeprägt, wobei mittels unterschiedlicher Stempel die Verformung des Teiges bewirkt und schließlich mittels eines Ausstanzstempels der Teig für das Kernloch aus dem Teigstück ausgestanzt wird. Ein vergleichbares Verfahren sowie eine vergleichbare Vorrichtung sind aus der US-2,612,853 bekannt.

Nachteil der aus dem Stand der Technik bekannten Verfahren und Vorrichtungen ist, dass eine Vielzahl von unterschiedlichen Bearbeitungsstationen nötig ist, sowie dass die Form und Einheitlichkeit der erzeugten Ringe durch Positionierungsfehler an den einzelnen Stationen negativ beeinflusst wird. Weiters wird durch das Ausstanzen des Loches des Ringes bzw. durch das Entfernen des Teiges aus dem Kernloch ein hoher prozentueller Anteil des Teiges entfernt, womit ein großer Teigverlust erzeugt wird. Ebenfalls kommt es bei den aus dem Stand der Technik bekannten Verfahren und Vorrichtungen oft dazu, dass beim Ausstechen des Kernloches die sogenannte Haut des Teiges verletzt wird, wodurch beim anschließenden Frittieren der Ringe Fett bzw. Öl in den Teig eindringen kann und die Qualität und den Geschmack des Teiges verschlechtert.

Aufgabe der vorliegenden Erfindung ist es daher, ein Verfahren und eine Vorrichtung zur Formung von Ringen bereitzustellen, die einerseits eine qualitativ hochwertige Bearbeitung und Herstellung von Ringen ermöglichen und gleichzeitig den Abfall oder Restteig an Teig bei der Herstellung von Ringen reduzieren.

Diese Aufgabe wird bei einem Verfahren zur Formung von Ringen mit den folgenden Merkmalen gelöst. Dabei ist vorgesehen, dass in einem ersten Schritt a) der Zentrierring auf dem Widerlager aufgelegt wird, wobei die Massenportion, insbesondere das Teigstück, mittels des Zentrierringes seitlich umfasst und mittels des Pressstempels gegen das Widerlager in eine annähernd zylindrische Form mit gleichmäßiger Dicke gepresst und vorzugsweise die Masse der Massenportion, insbesondere des Teigstückes, vergleichmäßigt wird, dass in einem zweiten Schritt b) mittels des Verdrängungsdorns in die Massenportion, insbesondere das Teigstück, ein, insbesondere zentral angeordnetes, Kernloch ausgebildet wird, wobei der Verdrängungsdorn einen geringeren Wert als die Dicke der im ersten Schritt a) vorgepressten Masseportion, insbesondere Teigstückes, in der Massenportion, insbesondere des Teigstückes, eindringt, sodass ein dünner Kern des Teigstückes zwischen dem Widerlager und dem Verdrängungsdorn stehen bleibt, dass in einem dritten Schritt c) mittels des Ausstechringes der Kern ausgestanzt wird, und dass in einem vierten Schritt d) der Presstempel von dem zu einem Ring geformten Massenportion, insbesondere Teigstück, abhebt, wobei insbesondere der Zentrierring geöffnet und/oder von dem Wiederlager abgehoben wird.

Durch die einzelnen Schritte des erfindungsgemäßen Verfahrens ist es möglich, den Restteig auf ein Minimum zu reduzieren und die Qualität des erzeugten Ringes deutlich zu erhöhen. Durch den Zentrierring und die Anordnung des Pressstempels wird die Form des Ringes vorgegeben und es ermöglicht, dass der Verdrängungsdorn in das Teigstück eindringt und der bei dem Stand der Technik ausgestanzte Teig nicht dem Teigstück entzogen, sondern verdrängt wird. Durch die Verdrängung mittels des Verdrängungsdorns, welcher die Haut des Teigstückes mit einzieht, wird diese Haut des Teiges wieder geschlossen bzw. nicht verletzt und so die Struktur des geformten Ringes positiv beeinflusst. Mit Hilfe der Verdrängung des Teiges aus dem Bereich des Kernloches ist es darüber hinaus auch möglich, anschließend mit dem Ausstechring nur einen geringen Teil des Teiges zu entfernen und dabei gleichzeitig eine homogene, geschlossene Haut bzw. Oberfläche des geformten Ringes zu erreichen. Ein weiterer Vorteil ist, dass flachgedrückte, also in der Höhe vorgedrückte, als auch nicht vorgedrückte Teigstücke geformt werden können.

Weitere vorteilhafte Ausführungsformen des erfindungsgemäßen Verfahrens werden durch die Merkmale der abhängigen Ansprüche näher definiert:
Um die Massenverteilung bzw. die Dichte des Teiges zu verbessern kann vorgesehen sein, dass im zweiten Schritt b) während des Eindringens des Verdrängungsdorns der Zentrierring kontinuierlich geöffnet und/oder der Pressstempel kontinuierlich zurückgezogen wird, sodass das verdrängte Volumen der Massenportion, insbesondere des Teigstückes, in den durch den Zentrierring freigegebenen Raum verdrängt wird.

Durch die kontinuierliche Öffnung des Zentrierringes wird ein Raum im zweiten Schritt des Verfahrens freigegeben, in dem der aus dem Kernloch verdrängte Teig sich ausbreiten kann. Durch den freigegebenen Raum wird die Dichte und Massenverteilung innerhalb des geformten Ringes beibehalten, ohne dass unterschiedliche Massenverteilungen oder unterschiedliche Dichten entlang der Breite oder Dicke des Ringes erzeugt werden. Weiters wird durch den feigegegebenen Raum auch ein positives Fliessverhalten während der Formung des Kernloches ermöglicht ohne dass Teile des Teiges ungewünscht verdichtet werden.

Um den nach dem zweiten Schritt b) übrig gebliebenen Kern vorteilhaft von dem geformten Ring zu trennen bzw. zu entfernen kann vorgesehen sein, dass im dritten Schritt c) der Kern in den Ausstechring aufgenommen wird oder dass der Kern, insbesondere in einen zwischen zwei in einem Abstand zueinander angeordneten Transportbändern liegenden Spalt, nach dem Austanzen aus dem fertig geformten Ring ausgebracht wird, oder dass der Kern über eine Absaugvorrichtung eingesaugt oder über ein Riemenband oder das Transportband ausgeworfen wird.

Um eine schnelle industrielle Fertigung besser ermöglichen zu können, kann vorgesehen sein, dass das Widerlager als Transportband ausgebildet ist, auf dem das Teigstück während der Verformung transportiert wird, wobei die Pressvorrichtung mit dem Transportband mit dessen Geschwindigkeit mitbewegt wird, oder dass die Pressvorrichtung als Trommelformer ausgebildet ist und mit der Geschwindigkeit des Transportbandes mitgeschwenkt wird. Durch die Mitbewegung der Pressvorrichtung mit dem Transportband ist es möglich, mehrere Teigstücke hintereinander auf einem Transportband anzuordnen, die dann einzeln mit der Pressvorrichtung bearbeitet und so eine größere Anzahl von Ringen in kurzer Zeit erzeugt werden können.

Vorteilhaft kann vorgesehen sein, dass die mittels des Verfahrens geformten Massenportionen, insbesondere Teigstücke, runde Rohringe sind, wobei die in die Formvorrichtung eingebrachten Massenportionen, insbesondere Teigstücke, flachgedrückte oder vorgedrückte oder kugelförmige Massenportionen, insbesondere Teigstücke, sind, und/oder dass der Pressstempel synchron mit dem Verdrängungsdorn sowie dem Ausstechring bewegt wird, sodass die Masseportion zu einer Scheibe geformt wird.

Es ist weiters Aufgabe der Erfindung, eine Formvorrichtung zur Formung von Ringen, insbesondere Teigringen, bereitzustellen, die es ermöglicht, in wenigen Schritten Ringe, insbesondre Teigringen, zu formen und dabei eine hohe Qualität und einen minimalen Anteil an Restteig des Teiges zu erreichen.

Diese Aufgabe wird durch die kennzeichnenden Merkmale des Anspruchs 6 gelöst. Dabei ist vorgesehen, dass der Pressstempel eine Ausnehmung aufweist, dass die Pressvorrichtung weiters einen Verdrängungsdorn zur Einbringung des Kernloches des Ringes aufweist, wobei der Verdrängungsdorn in der Ausnehmung des Pressstempels in dessen Verstellrichtung zum Pressstempel verstellbar angeordnet ist, dass zwischen dem Pressstempel und dem Verdrängungsdorn ein Ausstechring angeordnet ist, der insbesondere um den Verdrängungsdorn herum, angeordnet ist, wobei der Pressstempel, der Verdrängungsdorn und der Ausstechring unabhängig voneinander in Richtung des Widerlagers verstellbar sind, und dass die Pressvorrichtung einen, insbesondere mehrteiligen, Zentrierring zur Begrenzung des Durchmessers des geformten Ringes aufweist Formring für die Außenkontur der Massenportion, insbesondere des Teigstückes, bildet.

Durch die Anordnung des Verdrängungsdorns des Ausstechringes und des Zentrierringes innerhalb der Pressvorrichtung ist es möglich, die einzelnen Bearbeitungsschritte bei der Formung eines Ringes an einer einzigen Station durchzuführen, wodurch eine Zentrierung der Verformungswerkzeuge an einzelnen Stationen in Bezug auf das Teigstück entfällt. So wird eine einfachere und vor allem kostengünstigere Bearbeitung des Teiges möglich, die weiters eine hohe Qualität der erzeugten Ringe ermöglicht.

Weitere vorteilhafte Ausgestaltungen der erfindungsgemäßen Formvorrichtungen werden durch die abhängigen Ansprüche näher definiert:
Vorteilhaft kann vorgesehen sein, dass der Zentrierring ein- oder mehrteilig, insbesondere zweiteilig, ausgebildet ist, wobei der Zentrierring zwischen einem geöffneten und geschlossenem Zustand stufenlos verstellbar ist, wobei im geöffneten Zustand des Zentrierringes die Teile des Zentrierringes in Richtung quer zur Verstellrichtung des Pressstempels zueinander beabstandet sind und wobei die Teile des Zentrierringes im geschlossenen Zustand aneinander anliegen oder einen geringeren Abstand als im geöffneten Zustand aufweisen und einen Formring für die Außenkontur der Massenportion, insbesondere des Teigstückes, bilden.

Dabei ist vorteilhaft vorgesehen, dass der Zentrierring, der Verdrängungsdorn, der Ausstechring und der Pressstempel konzentrisch zueinander, insbesondere in der Achse der Ausnehmung des Pressstempels, angeordnet sind.

Um Ringe entlang eines Transportbandes einfach formen zu können, kann vorgesehen sein, dass das Widerlager als Transportband ausgebildet ist, auf dem das Teigstück beförderbar ist, wobei die Pressvorrichtung, der Zentrierring, der Verdrängungsdorn, der Ausstechring und der Pressstempel in Richtung der Bewegungsrichtung des Transportbandes mit der Geschwindigkeit des Transportbandes bewegbar sind.

Vorteilhaft ist vorgesehen, dass das Widerlage als Transportband, Transportleiste oder Drucktasse oder eine Anzahl von Transportleisten, Drucktassen oder als mehrflächige Transporttrommel ausgebildet ist..

Um die Synchronisation des Zentrierringes mit dem Presstempel weiter zu erhöhen, kann vorgesehen sein, dass der Zentrierring mit dem Pressstempel entlang dessen Bewegungsrichtung, insbesondere mit dem Pressstempel mit, bewegbar ist.

Eine parallele, industrielle Fertigung von Ringen wird besonders einfach bereitgestellt, indem entlang der Länge und/oder Breite des Widerlagers, insbesondere entlang der Länge und/oder Breite des Transportbandes, eine Anzahl von jeweils gleichartig ausgebildeten Pressvorrichtungen angeordnet ist.Durch die Anordnung mehrere Pressvorrichtungen entlang eines Transportbandes oder entlang des Widerlagers ist es möglich, mit einem Schritt eine große Anzahl von Ringen parallel bzw. hintereinander herzustellen und so einen hohen Durchsatz von Ringen bzw. Teigstücken durch eine Fertigungsstation zu erreichen.

Eine vorteilhafte Ausführungsform wird bereitgestellt, indem die Formvorrichtung einen Hauptstempel aufweist, der, insbesondere senkrecht, zum Widerlager in einer Pressrichtung bewegbar ist, wobei die Pressvorrichtung an dem Hauptstempel angeordnet ist, wobei die Formvorrichtung einen, insbesondere an Führungen oder Schienen oder Stangen, bewegbaren Transportschlitten aufweist, wobei der Transportschlitten senkrecht zur Pressrichtung des Hauptstempels und/oder entlang der Breite oder Länge des Widerlagers bewegbar ist, und wobei der Hauptstempel mit dem Transportschlitten derart über Strukturelemente verbunden ist, dass der Hauptstempel senkrecht zur Pressrichtung des Hauptstempels und/oder entlang der Breite oder Länge des Widerlagers mit dem Transportschlitten mit bewegbar ist.

Um den Hauptstempel einfach mit einem Transportband mitbewegen zu können, kann vorgesehen sein, dass der Hauptstempel über Führungen, Schienen und/oder Stangen an dem Transportschlitten in Pressrichtung des Hauptstempels verschiebbar angeordnet ist.

Die Verstellung des Hauptstempels und damit der Pressvorgang der Ringe bzw. die Verstellung des Pressstempels, des Verdrängungsdorns, des Zentrierringes und des Ausstechringes kann platzsparend und einfach ermöglicht werden, indem der Hauptstempel über einen an dem Transportschlitten angeordneten Antrieb in seiner Pressrichtung verstellbar ist, wobei der Hauptstempel, insbesondere über einen Kurbeltrieb, mit dem Antrieb verbunden ist.

Um die Pressvorrichtung, den Zentrierring, den Verdrängungsdorn, den Ausstechring und/oder den Pressstempel einfach verstellen zu können, kann vorgesehen sein, dass die Pressvorrichtung, der Zentrierring, der Verdrängungsdorn, der Ausstechring und/oder der Pressstempel über ein Nockenschaltwerk oder elektromechanisch oder pneumatisch oder hydraulisch verstellbar sind.

Um unterschiedliche Formen des Teigstückes ausbilden zu können, kann vorgesehen sein, dass die Kontur des Zentrierrings und/oder des Presstempels (4) und/oder des Verdrängungsdorns oder des Ausstechrings rotationssymmetrisch, sternförmig, oval oder andere Formen aufweist.

Weitere Vorteile und Ausgestaltungen der Erfindung ergeben sich aus der Beschreibung und den beiliegenden Zeichnungen.

Die Erfindung ist im Folgenden anhand von besonders vorteilhaften, aber nicht einschränkend zu verstehenden Ausführungsbeispielen in den Zeichnungen schematisch dargestellt und wird unter Bezugnahme auf die Zeichnungen beispielhaft beschrieben:

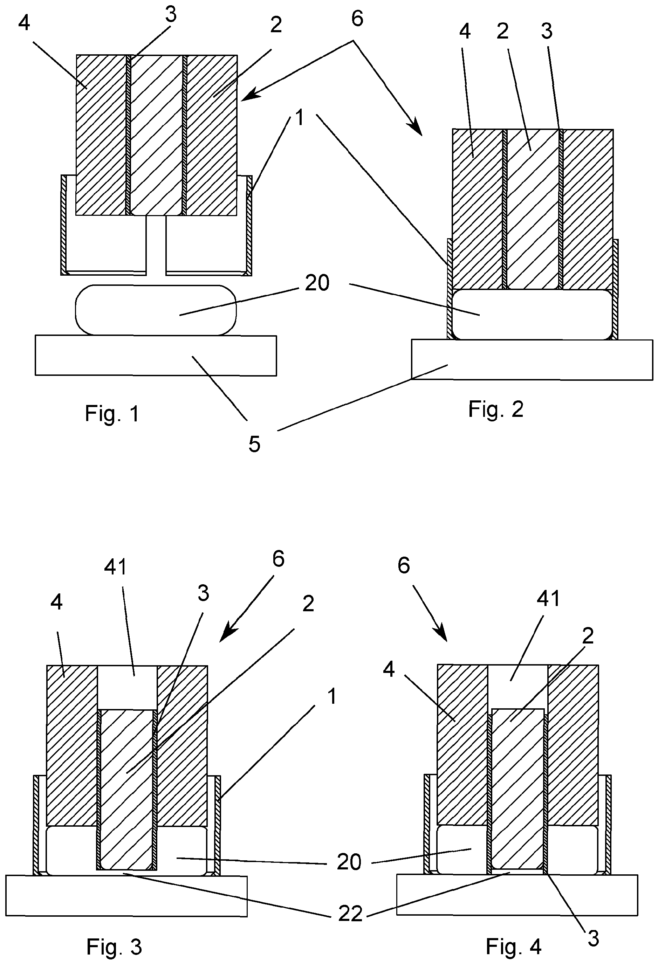

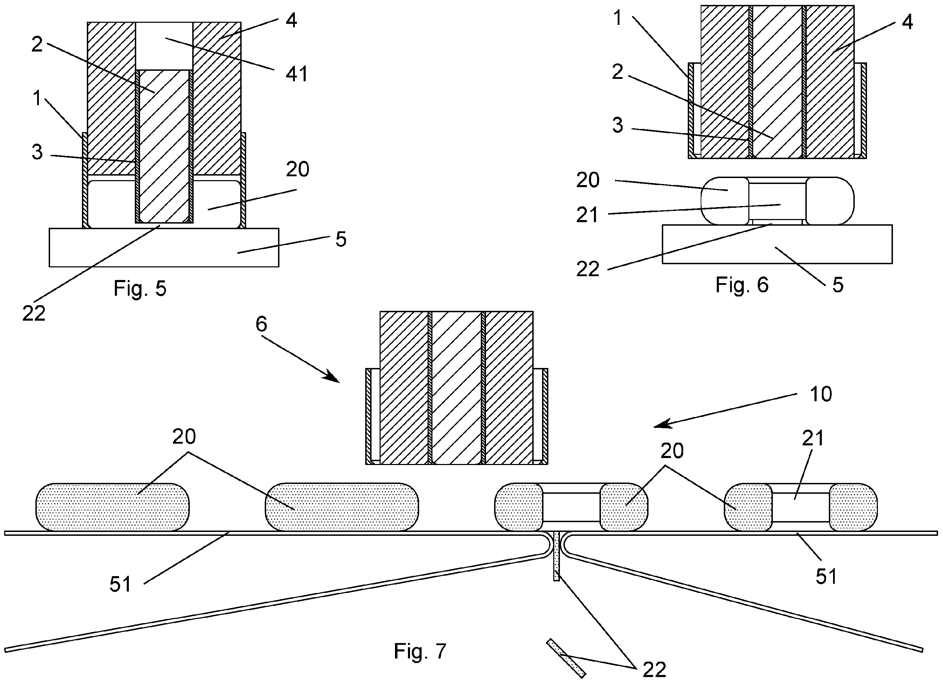

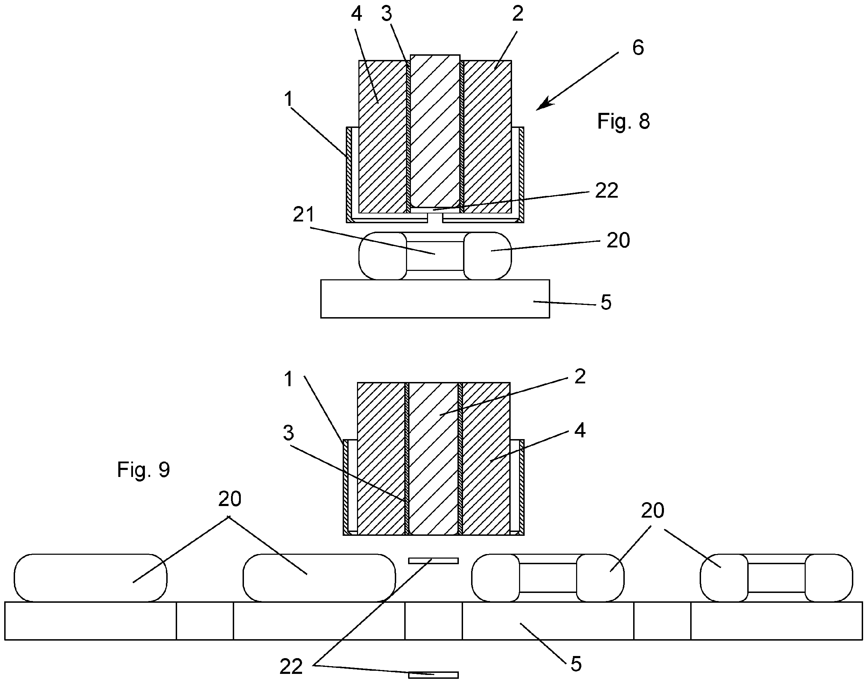

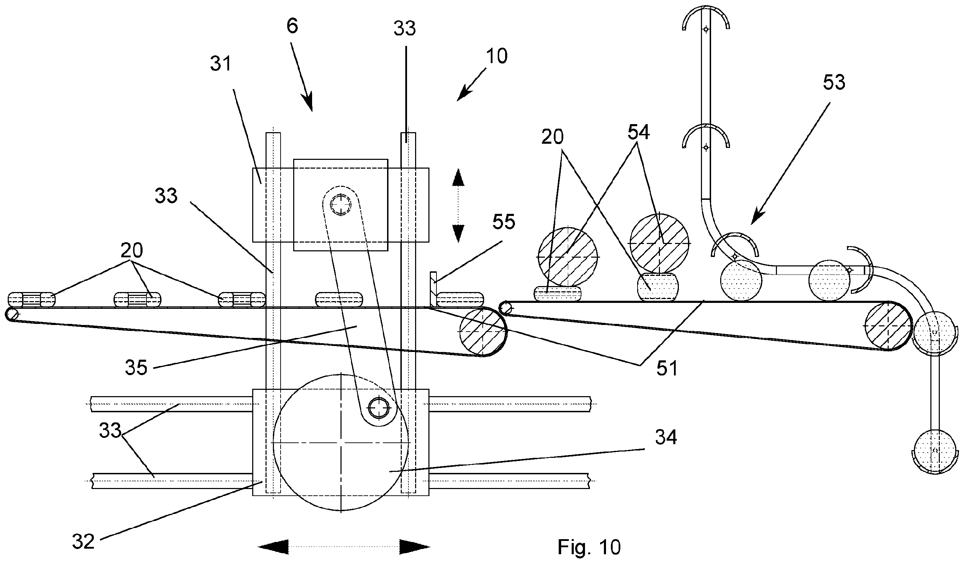

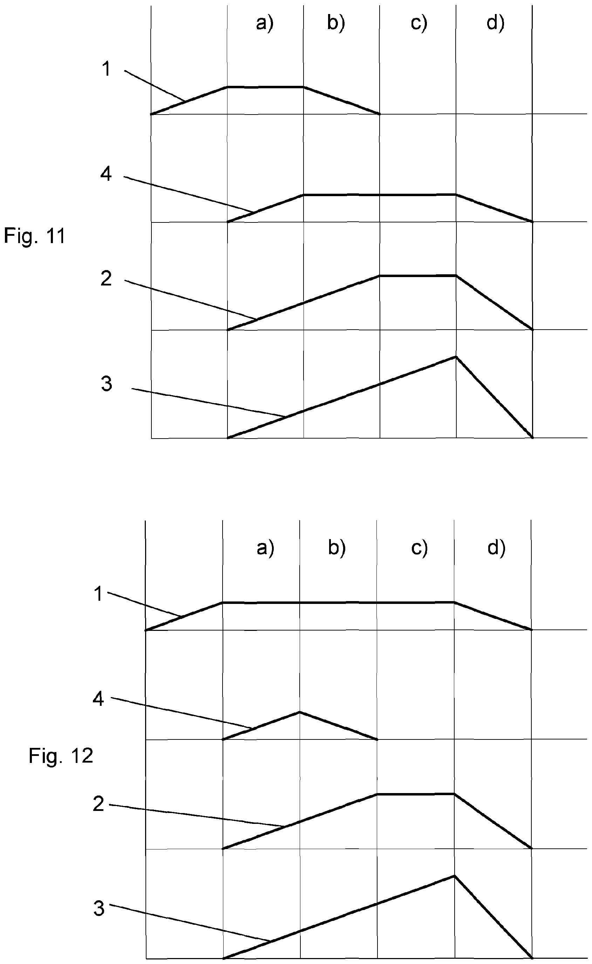

Fig. 1 bis Fig. 6 zeigen eine erste Ausführungsform der erfindungsgemäßen Vorrichtung, Fig. 7 zeigt eine alternative Ausbringung des Kernes, Fig. 8 und Fig. 9 zeigen eine Ausführungsform des erfindungsgemäßen Verfahrens, bei der der Kern des Teigstückes in den Ausstechring aufgenommen wird, Fig. 10 zeigt eine zweite Ausführungsform der erfindungsgemäßen Vorrichtung mit unterschiedlichen Bearbeitungszuständen des Teigstückes, Fig. 11 zeigt ein Ablaufdiagramm des Verfahrweges der Teile der Pressvorrichtung einer Ausführungsform des erfindungsgemäßen Verfahrens und Fig. 12 zeigt ein Ablaufdiagramm des Verfahrweges der Teile der Pressvorrichtung einer weiteren Ausführungsform des erfindungsgemäßen Verfahrens.

In den Fig. 1 bis 6 ist eine erste Ausführungsform der erfindungsgemäßen Formvorrichtung 10 in unterschiedlichen Bearbeitungszuständen der Formung des Teigringes dargestellt. Die Formvorrichtung 10 umfasst ein Widerlager 5, auf dem eine Massenportion, bei der vorliegenden Ausführungsform ein Teigstück 20, aufgelegt wird (Fig. 1). Die Formvorrichtung 10 umfasst weiters eine Pressvorrichtung 6, unter der das Teigstück 20 positioniert ist. Die Pressvorrichtung 6 weist einen mehrteiligen Zentrierring 1 und einen Pressstempel 4 auf. Der Pressstempel 4 ist über dem Teigstück 20 in einem Abstand zu dem Widerlager 5 positioniert und kann in Richtung des Widerlagers 5 senkrecht zur Auflagefläche des Widerlagers 5, auf dem das Teigstück 20 aufgelegt ist, verstellt werden, sodass der Abstand zwischen dem Widerlager 5 und dem Pressstempel 4 reduziert oder vergrößert wird. Die Pressvorrichtung 6 weist weiters einen Verdrängungsdorn 2 auf, der in einer Ausnehmung 41 des Pressstempels 4 angeordnet ist und ebenfalls in der Verstellrichtung des Pressstempels 4 in Richtung senkrecht zur Auflagefläche des Widerlagers 5 in der Ausnehmung 41 des Pressstempels 4 verstellbar ist. Der Pressstempel 4 und der Verdrängungsdorn 2 sind bei dieser Ausführungsform zylinderförmig ausgebildet, können aber auch andere Formen aufweisen. Zwischen dem Pressstempel 4 und dem Verdrängungsdorn 2 ist ein Ausstechring 3 angeordnet, der hohlzylinderförmig ausgebildet ist und bei der Ausführungsform der Fig. 1 bis 6 um den Verdrängungsdorn 2 herum zwischen diesem und dem Pressstempel 4 angeordnet ist. Der Zentrierring 1 besteht bei dieser Ausführungsform aus zwei Teilen, die zwischen einem geöffneten Zustand, in dem die beiden Teile quer zur Verstellrichtung des Pressstempels 4 beabstandet sind (Fig.1), und einem geschlossenen Zustand, in dem die beiden Hälften bzw. Teile des Zentrierringes 1 aneinander berührend anliegen, verstellt werden können (Fig. 2). Wie in der Ausführungsform der Fig. 1 bis 6 gezeigt kann der Zentrierring 1 optional mit dem Pressstempel 4 bzw. der Pressvorrichtung 6 zusätzlich auch in der Verstellrichtung des Pressstempels 4 verstellbar ausgebildet sein, wobei der Abstand zwischen dem Widerlager 5 und dem Zentrierring 1 zusätzlich veränderbar ist. Bei der in den Fig. 1 bis 6 dargestellten Ausführungsform der Formvorrichtung 10 sind der Zentrierring 1, der Verdrängungsdorn 2, der Ausstechring 3 und der Pressstempel 4 konzentrisch zueinander in der Achse der Ausnehmung 41 des Pressstempels 4 angeordnet.

Alternativ kann vorgesehen sein, dass der Zentrierring 1 auch einteilig ausgebildet ist und dieser in Verstellrichtung des Presstempels 4 verstellbar ist. So kann der Zentrierring 1 beispielsweise auf das Wiederlager 5 aufgelegt werden sodass der Zentrierring 1 das Teigstück umgibt und dann der Pressstempel 4 auf das Teigstück 20 aufgelegt und annährend zylinderförmig im ersten Schritt a) verformt werden.

Im Folgenden wird eine bevorzugte, aber nicht einschränkend zu verstehende Ausführungsform des erfindungsgemäßen Verfahrens anhand der Formvorrichtung 10 der Fig. 1 bis 6 erläutert:
Wie in Fig. 1 dargestellt, wird ein Teigstück 20 auf dem Widerlager 5 gegenüber bzw. unter der Pressvorrichtung 6 aufgelegt, wobei die Pressvorrichtung 6 in einem Abstand zum Widerlager 5 positioniert ist, sodass zwischen dem Pressstempel 4, dem Verdrängungsdorn 2, dem Ausstechring 3, dem Zentrierring 1 und dem Widerlager 5 ein Abstand frei bleibt.

In einem ersten Schritt a) wird der Zentrierring 1 auf dem Widerlager 5 aufgelegt und das Teigstück 20 mittels des Zentrierringes 1 seitlich umfasst, wobei der Zentrierring 1 aus der geöffneten Position (Fig. 1), in der die Teile des Zentrierringes 1 in einer Richtung senkrecht zur Verstellrichtung des Pressstempels 4 voneinander beabstandet sind, in den geschlossenen Zustand, in dem die Teile des Zentrierrings 1 einander berühren, verstellt wird. Im geschlossenen Zustand begrenzt der Zentrierring 1 das Teigstück 20 seitlich, wodurch der Durchmesser des Teigstückes 20 vorgegeben wird. Nach Schließen des Zentrierrings 1 wird der Pressstempel 4 mit dem Verdrängungsdorn 2 und dem Ausstrechring 3 auf das Teigstück 20 aufgelegt, wodurch ein Druck von dem Pressstempel 4 gegen das Widerlager 5 auf das Teigstück 20 aufgebracht wird. Das Teigstück 20 wird durch den Druck des Pressstempels 4 in eine annähernd zylindrische Form mit gleichmäßiger Dicke gepresst und die Masse des Teigstückes 20 vergleichmäßigt bzw. eine gleichmäßige Dichte und Verteilung des Teiges innerhalb des Teigstückes 20 bewirkt (Fig. 2).

In einem zweiten Schritt b) (Fig. 3) wird der Verdrängungsdorn 2 mit dem Ausstechring 3 gemeinsam weiter in Richtung des Widerlagers 5 verstellt, wodurch die Verdrängung des Teiges des Teigstückes 20 im Zentrum des zylindrisch vorgeformten Teigstückes 20 bewirkt und der Teig des Teigstückes 20 seitlich verdrängt wird. Der Abstand des Verdrängungsdorns 2 und des Ausstechringes 3 wird zum Widerlager 5 hin reduziert, wobei der Verdrängungsdorn 2 und der Ausstechring 3 nicht vollständig auf das Widerlager 5 aufgedrückt werden, sondern ein geringer Abstand zwischen dem Widerlager 5 und dem Verdrängungsdorn 2 als sogenannter dünner Kern 22 des Teigstückes 20 stehen bleibt. Durch das Eindringen des Verdrängungsdorns 2 in das Teigstück 20 wird ein zentral im Teigstück 20 angeordnetes Kernloch 21 ausgebildet, das dann dem fertig geformten Teigring die charakteristische Ringform gibt. Durch die Verdrängung des Teiges aus dem Kernloch 21 mittels des Verdrängungsdorns 2 wird ermöglicht, dass das Teigstück 20 eine geschlossene Haut, also eine geschlossene, homogene Oberfläche im Bereich des Kernloches 21, erhält und so bei einem späteren Frittieren bzw. der Weiterarbeitung der geformten Teigringe verhindert wird, dass Öl oder Fett in den Teig des Teigringes eindringt.

In einem dritten Schritt c) (Fig. 4) wird dann der Ausstechring 3 vollständig auf das Widerlager 5 aufgedrückt und so der im zweiten Schritt b) zurückgebliebene Kern 22 von dem Teigstück 20 abgetrennt und die Haut im Bereich des Kerns 22 vom Teigstück 20 geschlossen.

In einem vierten Schritt d) (Fig. 5 und 6) wird dann der Pressstempel 4 von dem geformten Teigring abgehoben und der Zentrierring 1 aus der geschlossenen Position wieder geöffnet. Anschließend wird die Pressvorrichtung 6, also der Pressstempel 4, der Verdrängungsdorn 2, der Ausstechring 3 und alternativ der Zentrierring 1 von dem Widerlager 5, abgehoben und dann der geformte Teigring aus der Formvorrichtung 10 ausgebracht bzw. herausgenommen.

Wie in den Fig. 3 und 4 dargestellt, kann während dem zweiten Schritt b), also der Verdrängung des Teiges des Teigstückes 20 durch den Verdrängungsdorn 2, der Zentrierring 1 optional schrittweise öffnen, sodass ein Raum für den Teig freigegeben wird, in den der vom Verdrängungsdorn 2 verdrängte Teig fließen kann, wodurch die gleichmäßige Dichte und Verteilung des Teiges innerhalb des Teigstückes 20 bzw. des geformten Teigringes beibehalten werden kann, ohne dass eine Verdichtung des Teiges des Teigstückes 20 bewirkt wird. Alternativ kann - wie in Fig. 5 dargestellt - vorgesehen sein, dass der Pressstempel 4 bei Verdrängung des Teiges mittels des Verdrängungsdorns 2 an Stelle des Zentrierringes 1 vom Teigstück 20 leicht abgehoben wird und der verdrängte Teig somit in den von dem Pressstempel 4 freigegebenen Raum fließt bzw. verdrängt werden kann.

Wie in Fig. 6 dargestellt, kann der ausgestochene Kern innerhalb des Kernloches 21 des geformten Teigringes bzw. des Teigstückes 20 verbleiben und, nachdem der Teigring aus der Formvorrichtung 10 ausgebracht wurde, entsorgt bzw. ebenfalls entfernt werden.

Eine weitere Ausführungsform des erfindungsgemäßen Verfahrens und der erfindungsgemäßen Formvorrichtung 10 ist in Fig. 7 dargestellt. Dabei ist das Widerlager 5 als Transportband 51 ausgebildet, wobei die Teigstücke 20 schrittweise mittels des Transportbandes 51 unter die Pressvorrichtung 6 gebracht und zu Teigringen verformt werden. Das unter der Pressvorrichtung 6 verlaufende Transportband 51 gibt dann in der Transportrichtung des Teigstückes 20 neben der Pressvorrichtung 6 den geformten Teigring an ein zweites Transportband 51 weiter, wobei die Transportbänder 51 jeweils in einem Abstand zueinander angeordnet sind, sodass der Kern 22 des Teigstückes 20 bwz. des geformten Teigringes in den Spalt bzw. den Abstand zwischen den Transportbändern 51 ausgebracht werden kann.

Alternativ kann auch vorgesehen sein, dass - wie in Fig. 8 und 9 dargestellt - der Kern 22 in dem Ausstechring 3 verbleibt und mit diesem bzw. mit der Pressvorrichtung 6 von dem Widerlager 5 abgehoben wird. Optional kann dann der ausgestochene Kern in dafür vorgesehene Ausnehmungen, beispielsweise Löcher die in einem Tranksportband 51 ausgebildet sind, ausgeworfen werden (Fig. 9).

In Fig. 11 ist eine Ausführungsform des erfindungsgemäßen Verfahrens in einem Ablaufdiagramm dargestellt. Das Ablaufdiagramm zeigt dabei die Verstellbewegungen des Zentrierringes 1, des Pressstempels 4, des Verdrängungsdorns 2 und des Stanzringes 3, abhängig von den unterschiedlichen Verfahrensschritten a), b), c) und d). Im ersten Verfahrensschritt a)wird der Zentrierring 1 auf dem Widerlager 5 aufgelegt (Fig. 1) und schließt kontinuierlich aus dem geöffneten in den geschlossenen Zustand(Fig. 2). Sobald der Zentrierring 1 geschlossen ist, werden der Presstempel 4, der Verdrängungsdorn 2 und der Ausstechring 3 in Richtung des Widerlagers 5 ausgefahren und bewirken, wie oben beschrieben, die Formung des Teigstückes 20 zu einem annähernd zylindrischen Teigstück (Fig. 2). Im zweiten Schritt b) wird der Pressstempel 4 angehalten und der Verdrängungsdorn 2 und der Ausstechring 3 werden weiter in den Teig des Teigstückes 20 gedrückt, sodass das Kernloch 21 gebildet wird (Fig. 3). Erreicht der Verdrängungsdorn 2 am Ende des zweiten Schrittes b) den zum Widerlager 5 gewünschten Abstand, wird dieser angehalten und der Ausstechring 3 im dritten Schritt c) weiter verstellt, sodass der Kern 22 aus dem Teigstück 20 ausgestanzt wird (Fig. 4). Nach Beendigung des Stanzvorganges bzw. des dritten Schrittes c) werden der Ausstechring 3, der Verdrängungsdorn 2 und der Pressstempel 4 wieder von dem Teigstück 20 abgehoben und so der fertig geformte Teigring anschleißend aus der Formvorrichtung 10 ausgebracht. Wie in Fig. 11 dargestellt, kann der Zentrierring 1 während des Verdrängungsvorganges des Teiges aus dem Kernloch 21 analog zu Fig. 3 und 4 geöffnet werden und so Raum für den Teig freigegeben werden. Dies wird durch die Rückführung des Zentrierrings 1 in den Ausgangszustand im Schritt b) in Fig. 11 dargestellt, wobei der Zentrierring 1 in der geöffneten Stellung im Schritt c) und d) bzw. im dritten und vierten Schritt verweilt.

Alternativ kann auch - wie in Fig. 12 dargestellt -analog zur Fig. 5 der Pressstempel 4 während dem Verdrängungsvorgang bzw. dem zweiten und dritten Schritt b) und c) angehoben bzw. in die Ausgangsstellung zurückgeführt werden und so der Raum für den Teig des Teigstückes 20 freigegeben werden, wobei der Zentrierring 1 in der geschlossenen Position bis zum Ende des dritten Schrittes c) verharrt und anschließend im vierten Schritt d) mit dem Verdrängungsdorn 2 und dem Ausstechring 3 in die Ausgangsposition gebracht wird.

In die Formvorrichtung 10 können beispielsweise flachgedrückte oder vorgedrückte oder kugelförmige Teigstücke 20 eingebracht werden, die dann zu runden Rohteigringen geformt werden. So können beispielsweise Doughnuts, Bagels, Brandteigringe, Zimtringe und anderen Teigstücke produziert werden bzw. die Rohteiglinge dieser Teigstücke produziert werden.

Eine bevorzugte Ausführungsform des Verfahrens sieht vor, dass das Widerlager 5 als Transportband 51 ausgebildet ist, auf dem das Teigstück 20 während der Verformung durch die Formvorrichtung bzw. die Pressvorrichtung 6 kontinuierlich weitertransportiert wird, wobei die Pressvorrichtung 6, also der Pressstempel 4, der Zentrierring 1, der Verdrängungsdorn 2 und der Ausstechring 3, gemeinsam mit der Geschwindigkeit des Transportbandes 51 mitbewegt werden. So kann beispielsweise eine industrielle Fertigung auf Transportbändern verwirklicht werden, wobei schrittweise einzelne Teigstücke 20 (Fig. 10) mittels des Transportbandes 51 unter die Pressvorrichtung 6 transportiert werden und während dem Pressvorgang mit dem Transportband 51 gemeinsam mit der Pressvorrichtung 6 weitertransportiert werden. Nach Abschluss des Pressvorganges wird die Pressvorrichtung 6 dann wieder entgegen der Bewegungsrichtung des Transportbandes 51 zurückverstellt und über dem nächsten Teigstück 20 positioniert und der Pressvorgang neu gestartet.

In Fig. 10 ist eine weitere Ausführungsform der erfindungsgemäßen Formvorrichtung 10 dargestellt. Mittels eines ersten Transportbandes 51 wird Teig in Form von Teigkugeln mittels einer Transportvorrichtung 53 auf das erste Transportband 51 aufgelegt und mittels Formwalzen 54 in eine zylindrische Form vorgeformt. Am Ende der Vorformung wird das Teigstück 20 von dem ersten Transportband 51 auf ein zweites Transportband 51 übergeben und dieses beispielsweise mittels eines bewegbaren Anschlages 55 vorpositioniert. Das als zweites Transportband 51 ausgebildete Widerlager 5 bewegt sodann das vorpositionierte Teigstück 20 in den Bereich der Pressvorrichtung 6, wobei dann der Formvorgang beginnt. Die Formvorrichtung 10 weist einen Hauptstempel 31 auf, der an Führungen bzw. Stangen 33 in Richtung des Widerlagers 5 bzw. des Transportbandes 51 verstellbar angeordnet ist. Die Pressvorrichtung 6 mit dem Zentrierring 1, dem Pressstempel 4, dem Verdrängungsdorn 2 und dem Ausstechring 3, ist an dem Hauptstempel 31 angeordnet. Weiters weist die Formvorrichtung 10 einen Transportschlitten 32 auf, an dem der Hauptstempel 31 bzw. die Führungen oder Stangen 33 befestigt bzw. angeordnet sind. Der Transportschlitten 32 ist entlang der Bewegungsrichtung des Transportbandes 51, beispielsweise auf Führungen oder Stangen 33, verstellbar, wodurch die Pressvorrichtung 6 mit dem Transportschlitten 32 mit dem Transportband 51 mitbewegt werden kann. So ist es möglich, während dem Transport der Teigstücke 20 im Verformvorgang bzw. vor oder nach dem Verformvorgang auf dem Transportband 51 mitzubewegen bzw. weiterzubefördern und so eine einfache industrielle Fertigung bei kontinuierlicher Weiterbeförderung der einzelnen Teigtücke zu erreichen. Wie in Fig. 10 dargestellt, kann der Hauptstempel 31 über einem an dem Transportschlitten 32 angeordneten Antrieb 34 in Richtung des Widerlagers 5 bzw. des Transportbandes 51 verstellt werden, wobei der Antrieb 34 alternativ, wie in Fig. 10 dargestellt, über einen Kurbeltrieb oder andere, aus dem Stand der Technik bekannte Verstellvorrichtungen, wie elektromechanische Motoren oder Spindeln pneumatische oder hydraulische Zylinder, verstellt werden.

Optional kann vorgesehen sein, dass die Pressvorrichtung 6 ein Nockenschaltwerk oder andere elektromechanische Verstellvorrichtungen aufweist, mit denen der Zentrierring 1, der Verdrängungsdorn 2, der Ausstechring 3 und der Pressstempel 4 unabhängig voneinander verstellbar sind.

Optional kann weiters vorgesehen sein, dass das Widerlager 5 als Transportband 51, als Transportleiste oder als Drucktasse oder als eine Anzahl von Transportleisten, Drucktassen oder als mehrflächige Transporttrommel ausgebildet ist. So kann beispielsweise auch der Pressvorgang gegen eine Transporttrommel erfolgen, die kontinuierlich oder getaktet nach Beendigung des Pressvorganges weitergedreht wird.

Weiters kann für eine Großfertigung oder für eine Fertigung mehrere Teigstücke parallel vorgesehen sein, dass entlang der Länge und/oder Breite des Widerlagers 5 bzw. insbesondere entlang der Länge und/oder Breite des Transportbandes 51 eine Anzahl von jeweils gleich ausgebildeten Pressvorrichtungen 6 angeordnet ist, mit denen parallel mehrere Teigringe aus den Teigstücken 20 geformt werden.

Anstelle der beschriebenen Teigringe oder Doughnuts können mittels dem erfindungsgemäßen Verfahren und der Vorrichtung 10 auch Bagels, Brandteigringe, Zimtringe und andere runde Rohteigringe erzeugt werden. Die Form der geformten Teigstücke kann auch alternativ eckig, also beispielsweise Quaderförmig, kugelförmig oder andere Formen aufweisen.

Alternativ kann auch vorgesehen sein, dass der Pressstempel 4 synchron mit dem Verdrängungsdorn 2 sowie dem Ausstechring 3 bewegt wird, sodass die Masseportion 20 zu einer Scheibe geformt wird.

Alternativ kann vorgesehen sein, dass anstelle der Teigstücke 20 andere Masseportionen der Verformung zugrunde gelegt werden.

Alternativ kann die Kontur des Zentrierrings 1 und/oder des Presstempels 4 und/oder des Verdrängungsdorns 2 oder des Ausstechrings 3 rotationssymmetrisch, sternförmig, oval oder andere Formen aufweist. So kann beispielsweise ein sternförmiges Teigstück produziert werden oder dem Teigstück auch andere Formen ausgebildet werden.

Alternativ zu den gezeigten Aufrührungsformen die Pressvorrichtung 6 als Trommelformer ausgebildet sein und mit der Geschwindigkeit des Transportbandes 51 mitgeschwenkt wird. Dabei können beispielsweise mehrere Pressvorrichtungen 6 in einem Trommelformer integriert sein und so parallel oder hintereinander mehrere Teigstücke 20 simultan bearbeitet werden.

Alternativ kann vorgesehen sein, dass der Kern über eine Absaugvorrichtung eingesaugt bzw. von dem Transportband 51 oder aus der Pressvorrichtung 6 abgesaugt oder über ein Riemenband oder das Transportband 51 ausgeworfen wird.

Alternativ zu den beschriebenen Ausführungsformen kann vorgehen sein, dass die Teigstücke 20 bzw. die Rohringe aus einem auf dem Transportband 51 bewegten Teigband durch die Pressvorrichtung 6 oder separate Ausstechelemente ausgestochen werden und dann durch die Pressvorrichtung 6 verformt werden.

## Patentansprüche

1. Verfahren zur Formung von Ringen, insbesondere Teigringe, aus Teig oder anderen Massen, insbesondere Doughnuts, Bagels, Brandteigringe, Zimtringe und anderen, wobei eine Massenportion, insbesondere ein Teigstück (20), in eine Formvorrichtung (10) auf einem Widerlager (5), insbesondere einem Transportband (51), unter einer Pressvorrichtung (6) positioniert wird, wobei die Pressvorrichtung (6) einen, insbesondere mehrteiligen, Zentrierring (1), einen Verdrängungsdorn (2), einen Ausstechring (3) und einen Pressstempel (4) aufweist, wobei die Formung des Ringes nach folgenden Schritten erfolgt:
wobei in einem ersten Schritt a) der Zentrierring (1) auf dem Widerlager (5) aufgelegt wird,
wobei die Massenportion, insbesondere das Teigstück (20), mittels des Zentrierringes (1) seitlich umfasst und mittels des Pressstempels (4) gegen das Widerlager (5) in eine annähernd zylindrische Form mit gleichmäßiger Dicke gepresst und vorzugsweise die Masse der Massenportion, insbesondere des Teigstückes (20), vergleichmäßigt wird,
wobei in einem zweiten Schritt b) mittels des Verdrängungsdorns (2) in dem Teigstück (20) ein, insbesondere zentral angeordnetes, Kernloch (21) ausgebildet wird, wobei der Verdrängungsdorn (2) einen geringeren Wert als die Dicke des im ersten Schritt a) vorgepressten Teigstückes (20) in die Massenportion, insbesondere das Teigstück (20),eindringt, sodass ein dünner Kern (22) der Massenportion, insbesondere des Teigstückes (20), zwischen dem Widerlager (5) und dem Verdrängungsdorn (2) stehen bleibt,
wobei in einem dritten Schritt c) mittels des Ausstechringes (3) der Kern (22) ausgestanzt wird, und
wobei in einem vierten Schritt d) der Presstempel (4) von dem zu einem Ring geformten Massenportion, insbesondere Teigstück (20), abhebt, wobei insbesondere der Zentrierring (1) geöffnet und/oder von dem Wiederlager (5) abgehoben wird.

2. Verfahren nach Anspruch 1, **dadurch gekennzeichnet, dass** im zweiten Schritt b) während des Eindringens des Verdrängungsdorns (2) der Zentrierring (1) kontinuierlich geöffnet und/oder der Pressstempel (4) kontinuierlich zurückgezogen wird, sodass das verdrängte Volumen der Massenportion, insbesondere des Teigstückes (20), in den durch den Zentrierring (1) freigegebenen Raum verdrängt wird.

3. Verfahren nach einem der Ansprüche 1 oder 2, **dadurch gekennzeichnet, dass** im dritten Schritt c) der Kern (22) in den Ausstechring (3) aufgenommen wird oder dass der Kern (22), insbesondere in einen zwischen zwei in einem Abstand zueinander angeordneten Transportbändern (51) liegenden Spalt, nach dem Austanzen aus dem fertig geformten Ring ausgebracht wird oder dass der Kern (22) über eine Absaugvorrichtung eingesaugt oder über ein Riemenband oder das Transportband (51) ausgeworfen wird.

4. Verfahren nach eine der vorangehenden Ansprüche, **dadurch gekennzeichnet, dass** das Widerlager (5) als Transportband (51) ausgebildet ist, auf dem das Teigstück (20) während der Verformung transportiert wird, wobei die Pressvorrichtung (6) mit dem Transportband (51) mit dessen Geschwindigkeit mitbewegt wird, oder dass die Pressvorrichtung (6) als Trommelformer ausgebildet ist und mit der Geschwindigkeit des Transportbandes (51) mitgeschwenkt wird.

5. Verfahren nach einem der Ansprüche 1 bis 4, **dadurch gekennzeichnet, dass** die mittels des Verfahrens geformten Massenportionen, insbesondere Teigstücke (20), runde Rohringe sind, wobei die in die Formvorrichtung (10) eingebrachten Massenportionen, insbesondere Teigstücke (20), flachgedrückte oder vorgedrückte oder kugelförmige Massenportionen, insbesondere Teigstücke (20), sind, und/oder dass der Pressstempel (4) synchron mit dem Verdrängungsdorn (2) sowie dem Ausstechring (3) bewegt wird, sodass die Masseportion (20) zu einer Scheibe geformt wird.

6. Formvorrichtung (10) zur Formung von Ringen, insbesondre Teigringen zur Durchführung des Verfahrens nach einem der Ansprüche 1 bis 5 umfassend ein Widerlager (5) auf dem eine Massenportion, insbesondere ein Teigstück (20), auflegbar ist und eine gegenüber dem Widerlager (5), insbesondere lotrecht zum Widerlager (5), in einem Abstand angeordnete Pressvorrichtung (6), wobei die Pressvorrichtung (6) einen Pressstempel (4) aufweist, der in Richtung des Widerlagers (5) den Abstand verringernd verstellbar angeordnet ist,
- wobei der Pressstempel (4) eine Ausnehmung (41) aufweist, wobei die Pressvorrichtung (6) weiters einen Verdrängungsdorn (2) zur Einbringung des Kernloches in die Massenportion, insbesondere das Teigstück (20), aufweist, wobei der Verdrängungsdorn (2) in der Ausnehmung (41) des Pressstempels (4) in dessen Verstellrichtung zum Pressstempel (4) verstellbar angeordnet ist, wobei zwischen dem Pressstempel (4) und dem Verdrängungsdorn (2) ein Ausstechring (3) angeordnet ist, der insbesondere um den Verdrängungsdorn (2) herum, angeordnet ist, wobei der Pressstempel (4), der Verdrängungsdorn (2) und der Ausstechring (3) unabhängig voneinander in Richtung des Widerlagers (5) verstellbar sind, und
- wobei die Pressvorrichtung (6) einen, insbesondere mehrteiligen, Zentrierring (1) zur Begrenzung des Durchmessers des geformten Ringes, insbesondere Teigringes, aufweist Formring für die Außenkontur der Massenportion, insbesondere des Teigstückes (20), bildet,
**dadurch gekennzeichnet, dass** die Formvorrichtung dazu ausgebildet ist, das Verfahren nach einem der Ansprüche 1 bis 5 durchzuführen.

7. Formvorrichtung (10) nach Anspruch 6, **dadurch gekennzeichnet, dass** der Zentrierring (1) ein- oder mehrteilig, insbesondere zweiteilig, ausgebildet ist, wobei der Zentrierring (1) zwischen einem geöffneten und geschlossenem Zustand stufenlos verstellbar ist, wobei im geöffneten Zustand des Zentrierringes (1) die Teile des Zentrierringes (1) in Richtung quer zur Verstellrichtung des Pressstempels (4) zueinander beabstandet sind oder einengeringeren Abstand als im geöffneten Zustand aufweisen und wobei die Teile des Zentrierringes (1) im geschlossenen Zustand aneinander anliegen und einen Formring für die Außenkontur der Massenportion, insbesondere des Teigstückes (20), bilden.

8. Formvorrichtung (10) nach einem der Ansprüche 6 oder 7, **dadurch gekennzeichnet, dass** der Zentrierring (1), der Verdrängungsdorn (2), der Ausstechring (3) und der Pressstempel (4) konzentrisch zueinander, insbesondere in der Achse der Ausnehmung (41) des Pressstempels (4), angeordnet sind.

9. Formvorrichtung (10) nach einem der Ansprüche 6 oder 8, **dadurch gekennzeichnet, dass** das Widerlager (5) als Transportband (51) ausgebildet ist, auf dem das Teigstück (20) beförderbar ist, wobei die Pressvorrichtung (6), der Zentrierring (1), der Verdrängungsdorn (2), der Ausstechring (3) und der Pressstempel (4) in Richtung der Bewegungsrichtung des Transportbandes mit der Geschwindigkeit des Transportbandes (51) bewegbar sind.

10. Formvorrichtung (10) nach einem der Ansprüche 6 bis 9, **dadurch gekennzeichnet, dass** das Widerlager (5) als Transportband (51), Transportleiste oder Drucktasse oder eine Anzahl von Transportleisten, Drucktassen oder als mehrflächige Transporttrommel ausgebildet ist.

11. Formvorrichtung (10) nach einem der Ansprüche 6 bis 10, **dadurch gekennzeichnet, dass** der Zentrierring (1) mit dem Pressstempel (4) entlang dessen Bewegungsrichtung, insbesondere mit dem Pressstempel (4) mit, bewegbar ist.

12. Formvorrichtung (10) nach einem der Ansprüche 6 bis 11, **dadurch gekennzeichnet, dass** entlang der Länge und/oder Breite des Widerlagers (5), insbesondere entlang der Länge und/oder Breite des Transportbandes (51), eine Anzahl von jeweils gleichartig ausgebildeten Pressvorrichtungen (6) angeordnet ist.

13. Formvorrichtung (10) nach einem der Ansprüche 6 bis 12, **dadurch gekennzeichnet, dass** die Formvorrichtung (10) einen Hauptstempel (31) aufweist, der, insbesondere senkrecht, zum Widerlager (5) in einer Pressrichtung bewegbar ist,
wobei die Pressvorrichtung (6) an dem Hauptstempel (31) angeordnet ist, wobei die Formvorrichtung (10) einen, insbesondere an Führungen oder Schienen oder Stangen, bewegbaren Transportschlitten (32) aufweist, wobei der Transportschlitten (32) senkrecht zur Pressrichtung des Hauptstempels (31) und/oder entlang der Breite oder Länge des Widerlagers (5) bewegbar ist, und wobei der Hauptstempel (31) mit dem Transportschlitten (32) derart über Strukturelemente verbunden ist, dass der Hauptstempel (31) senkrecht zur Pressrichtung des Hauptstempels (31) und/oder entlang der Breite oder Länge des Widerlagers (5) mit dem Transportschlitten mit bewegbar ist.

14. Formvorrichtung (10) nach Anspruch 13, **dadurch gekennzeichnet, dass** der Hauptstempel (31) über Führungen, Schienen und/oder Stangen (33) an dem Transportschlitten (32) in Pressrichtung des Hauptstempels (31) verschiebbar angeordnet ist, und/oder
dass der Hauptstempel (31) über einen an dem Transportschlitten (32) angeordneten Antrieb (34) in seiner Pressrichtung verstellbar ist, wobei der Hauptstempel (31), insbesondere über einen Kurbeltrieb (35), mit dem Antrieb (34) verbunden ist.

15. Formvorrichtung (10) nach einem der Ansprüche 6 bis 14, **dadurch gekennzeichnet, dass** die Pressvorrichtung (6), der Zentrierring (1), der Verdrängungsdorn (2), der Ausstechring (3) und/oder der Pressstempel (4) über ein Nockenschaltwerk oder elektromechanisch oder pneumatisch oder hydraulisch verstellbar sind, und/oder
dass die Kontur des Zentrierrings (1) und/oder des Presstempels (4) und/oder des Verdrängungsdorns (2) oder des Ausstechrings (3) rotationssymmetrisch, sternförmig, oval oder andere Formen aufweist.

## Claims

1. Method for forming rings, in particular dough rings, from dough or other masses, in particular doughnuts, bagels, choux pastry rings, cinnamon rings and others, wherein a mass portion, in particular a dough piece (20), is positioned into a forming device (10) on an abutment (5), in particular a conveyor belt (51), under a pressing device (6), wherein the pressing device (6) has a, in particular multi-part, centring ring (1), a displacement rod (2), a cut-out ring (3) and a press ram (4), wherein the ring is formed in accordance with the following steps:
wherein in a first step a) the centring ring (1) is placed on the abutment (5), wherein the mass portion, in particular the dough piece (20), is laterally enclosed by means of the centring ring (1) and is pressed by means of the press ram (4) against the abutment (5) into an approximately cylindrical form with a uniform thickness and preferably the mass of the mass portion, in particular of the dough piece (20), is made uniform, wherein in a second step b) a, in particular centrally arranged, core hole (21) is made in the dough piece (20) by means of the displacement rod (2), wherein the displacement rod (2) penetrates into the mass portion, in particular the dough piece (20), to a smaller value than the thickness of the dough piece (20) pre-pressed in the first step a), such that a thin core (22) of the mass portion, in particular of the dough piece (20), remains between the abutment (5) and the displacement rod (2),
wherein in a third step c) the core (22) is punched out by the cut-out ring (3), and
wherein in a fourth step d) the press ram (4) is lifted off the mass portion, in particular dough piece (20), which is formed into a ring, wherein in particular the centring ring (1) is opened and/or lifted off the abutment (5).

2. Method according to claim 1, **characterised in that** in the second step b), during the penetration of the displacement rod (2), the centring ring (1) is continuously opened and/or the press ram (4) is continuously withdrawn, such that the displaced volume of the mass portion, in particular of the dough piece (20), is displaced into the space freed by the centring ring (1).

3. Method according to any of claims 1 or 2, **characterised in that** in the third step c) the core (22) is fitted into the cut-out ring (3) or **in that** the core (22) is removed, in particular into a gap situated between two conveyor belts (51) arranged at a distance from one another, after being punched out of the completely formed ring, or **in that** the core (22) is sucked in by a suction device or is ejected by a belt strap or the conveyor belt (51).

4. Method according to any of the preceding claims, **characterised in that** the abutment (5) is configured as a conveyor belt (51) on which the dough piece (20) is transported during forming, wherein the pressing device (6) is propelled with the conveyor belt (51) at the speed of the latter, or **in that** the pressing device (6) is configured as a drum former and is rotated at the speed of the conveyor belt (51).

5. Method according to any of claims 1 to 4, **characterised in that** the mass portions, in particular dough pieces (20), formed by means of the method are round piping rings, wherein the mass portions, in particular dough pieces (20), inserted into the forming device (10) are flat-pressed or pre-pressed or spherical mass portions, in particular dough pieces (20), and/or **in that** the press ram (4) is moved in a synchronous manner with the displacement rod (2) as well as the cut-out ring (3), such that the mass portion (20) is formed into a disc.

6. Forming device (10) for forming rings, in particular dough rings, for performing the method according to any of claims 1 to 5, comprising an abutment (5) on which a mass portion, in particular a dough piece (20), can be placed and a pressing device (6) arranged at a distance with respect to the abutment (5), in particular perpendicular to the abutment (5), wherein the pressing device (6) has a press ram (4) which is arranged adjustably in the direction of the abutment (5) so as to reduce the distance,
- wherein the press ram (4) has a recess (41), wherein the pressing device (6) further has a displacement rod (2) for inserting the core hole into the mass portion, in particular the dough piece (20), wherein the displacement rod (2) is arranged in the recess (41) of the press ram (4) so as to be adjustable in its direction of adjustment relative to the press ram (4), wherein between the press ram (4) and the displacement rod (2) is arranged a cut-out ring (3), which is arranged in particular around the displacement rod (2), wherein the press ram (4), the displacement rod (2) and the cut-out ring (3) are adjustable independently of one another in the direction of the abutment (5), and
- wherein the pressing device (6) has a, in particular multi-part, centering ring (1) for restricting the diameter of the formed ring, in particular dough ring, forms forming ring for the outer contour of the mass portion, in particular of the dough piece (20),
**characterised in that** the forming device is configured to perform the method according to any of claims 1 to 5.

7. Forming device (10) according to claim 6, **characterised in that** the centring ring (1) is of one-part or multi-part configuration, in particular two-part configuration, wherein the centring ring (1) is continuously adjustable between an open and a closed state, wherein, when the centring ring (1) is in the open state, the parts of the centring ring (1) are separated from one another in the direction transverse to the direction of adjustment of the press ram (4) or are at a lesser distance from one another than in the open state, and wherein the parts of the centring ring (1), in the closed state, bear against one another and form a forming ring for the outer contour of the mass portion, in particular of the dough piece (20).

8. Forming device (10) according to any of claims 6 or 7, **characterised in that** the centring ring (1), the displacement rod (2), the cut-out ring (3) and the press ram (4) are arranged concentrically relative to one another, in particular in the axis of the recess (41) of the press ram (4).

9. Forming device (10) according to any of claims 6 or 8, **characterised in that** the abutment (5) is configured as a conveyor belt (51) on which the dough piece (20) can be transported, wherein the pressing device (6), the centring ring (1), the displacement rod (2), the cut-out ring (3) and the press ram (4) can be moved in the direction of motion of the conveyor belt at the speed of the conveyor belt (51).

10. Forming device (10) according to any of claims 6 to 9, **characterised in that** the abutment (5) is configured as a conveyor belt (51), transport bar or pressure cup or a number of transport bars, pressure cups or as a multi-surface transport drum.

11. Forming device (10) according to any of claims 6 to 10, **characterised in that** the centring ring (1) is movable with the press ram (4) along its direction of motion, in particular along with the press ram (4).

12. Forming device (10) according to any of claims 6 to 11, **characterised in that** a number of pressing devices (6), each of identical configuration, are arranged along the length and/or width of the abutment (5), in particular along the length and/or width of the conveyor belt (51).

13. Forming device (10) according to any of claims 6 to 12, **characterised in that** the forming device (10) has a main ram (31) which is movable, in particular perpendicularly, relative to the abutment (5) in a pressing direction, wherein the pressing device (6) is arranged on the main ram (31), wherein the forming device (10) has a transport carriage (32) which is movable, in particular on guides or rails or rods, wherein the transport carriage (32) is movable perpendicularly to the pressing direction of the main ram (31) and/or along the width or length of the abutment (5), and wherein the main ram (31) is connected to the transport carriage (32) by means of structural elements in such a way that the main ram (31) is movable along with the transport carriage, perpendicularly to the pressing direction of the main ram (31) and/or along the width or length of the abutment (5).

14. Forming device (10) according to claim 13, **characterised in that** the main ram (31) is arranged so that it can slide in the pressing direction of the main ram (31) via guides, rails and/or rods (33) on the transport carriage (32), and/or
**in that** the main ram (31) can be adjusted in its pressing direction via a drive (34) arranged on the transport carriage (32), wherein the main ram (31) is connected to the drive (34), in particular via a crank drive (35).

15. Forming device (10) according to any of claims 6 to 14, **characterised in that** the pressing device (6), the centring ring (1), the displacement rod (2), the cut-out ring (3) and/or the press ram (4) are adjustable by means of a cam switch or electromechanically or pneumatically or hydraulically, and/or
**in that** the contour of the centring ring (1) and/or of the press ram (4) and/or of the displacement rod (2) or of the cut-out ring (3) is rotationally symmetrical, star-shaped, oval or of other forms.

## Revendications

1. Procédé pour le moulage de roulés, en particulier de roulés de pâte, à partir de pâte ou d'autres masses, en particulier des beignets, des bagels, des roulés de pâte à chou, des roulés à la cannelle et d'autres, dans lequel une portion de masse, en particulier un morceau de pâte (20), est positionnée dans un dispositif de moule (10) sur une butée (5), en particulier une bande transporteuse (51), sous un dispositif de compression (6), dans lequel le dispositif de compression (6) présente une bague de centrage (1), en particulier à plusieurs parties, un mandrin d'extrusion (2), une bague emporte-pièce (3) et un piston de compression (4), dans lequel le moulage du roulé s'effectue selon les étapes suivantes :
dans lequel dans une première étape a) la bague de centrage (1) est posée sur la butée (5), dans lequel la portion de masse, en particulier le morceau de pâte (20), comprend latéralement au moyen de la bague de centrage (1) et est comprimée contre la butée (5) au moyen du piston de compression (4) en une forme approximativement cylindrique avec une épaisseur égale et de préférence la masse de la portion de masse, en particulier du morceau de pâte (20), est uniformisée, dans lequel dans une deuxième étape b) au moyen du mandrin d'extrusion (2) dans le morceau de pâte (20) un avanttrou (21) disposé en particulier au centre est réalisé, dans lequel le mandrin d'extrusion (2) pénètre dans la portion de masse, en particulier le morceau de pâte (20), à raison d'une valeur inférieure à l'épaisseur du morceau de pâte (20) précomprimé dans la première étape a), de sorte qu'un cœur (22) plus fin de la portion de masse, en particulier du morceau de pâte (20), reste entre la butée (5) et le mandrin d'extrusion (2),
dans lequel dans une troisième étape c) le noyau (22) est découpé au moyen de la bague emporte-pièce (3), et
dans lequel dans une quatrième étape d) le piston de compression (4) est retiré de la portion de masse moulée, en particulier le morceau de pâte (20), pour former un anneau, dans lequel en particulier la bague de centrage (1) est ouverte et/ou retirée de la butée (5).

2. Procédé selon la revendication 1, **caractérisé en ce que** dans la seconde étape b) pendant l'introduction du mandrin d'extrusion (2) la bague de centrage (1) est ouverte en continu et/ou le piston de compression (4) est rétracté en continu, de sorte que le volume refoulé de la portion de masse, en particulier du morceau de pâte (20), est refoulé dans l'espace libéré par la bague de centrage (1).

3. Procédé selon l'une quelconque des revendications 1ou 2, **caractérisé en ce que** dans la troisième étape c) le cœur (22) est logé dans la bague emporte-pièce (3) ou **en ce que** le cœur (22), en particulier dans une fente se trouvant entre deux bandes transporteuses (51) disposées à distance l'une de l'autre, après le découpage est extrait de la bague moulée finie ou **en ce que** le cœur (22) est aspiré via un dispositif d'aspiration ou éjecté via une bande de courroie ou la bande transporteuse (51).

4. Procédé selon l'une quelconque des revendications précédentes, **caractérisé en ce que** la butée (5) est réalisée en tant que bande transporteuse (51), sur laquelle le morceau de pâte (20) est transporté pendant la déformation, dans lequel le dispositif de compression (6) est déplacé avec la bande transporteuse (51) à la vitesse de celle-ci, ou **en ce que** le dispositif de compression (6) est réalisé en tant que façonneur de tambour et tourne à la vitesse de la bande transporteuse (51).

5. Procédé selon l'une quelconque des revendications 1 à 4, **caractérisé en ce que** les portions de masse moulées au moyen du procédé, en particulier les morceaux de pâte (20), sont des tubes ronds, dans lequel les portions de masse introduites dans le dispositif de moulage (10), en particulier des morceaux de pâte (20), sont des portions de masse, en particulier des morceaux de pâte (20), aplaties ou précomprimées ou coniques, et/ou **en ce que** le piston de compression (4) est déplacé de manière synchrone avec le mandrin d'extrusion (2) ainsi que la bague emporte-pièce (3), de sorte que la portion de masse (20) est moulée pour former un disque.

6. Dispositif de moulage (10) pour le moulage de roulés, en particulier des roulés de pâte pour l'exécution du procédé selon l'une quelconque des revendications 1 à 5 comprenant une butée (5) sur laquelle une portion de masse, en particulier un morceau de pâte (20), peut être posée et un dispositif de compression (6) disposé à distance à l'opposé de la butée (5), en particulier perpendiculairement à la butée (5), dans lequel le dispositif de compression (6) présente un piston de compression (4) qui est disposé de manière réglable en rétrécissant la distance dans la direction de la butée (5),
- dans lequel le piston de compression (4) présente un évidement (41), dans lequel le dispositif de compression (6) présente en outre un mandrin d'extrusion (2) pour l'introduction de l'avant-trou dans la portion de masse, en particulier le morceau de pâte (20), dans lequel le mandrin d'extrusion (2) est disposé de manière réglable par rapport au piston de compression (4) dans l'évidement (41) du piston de compression (4) dans le dispositif de réglage de celui-ci, dans lequel est disposée entre le piston de compression (4) et le mandrin d'extrusion (2) une bague emporte-pièce (3) qui est disposée en particulier autour du mandrin d'extrusion (2), dans lequel le piston de compression (4), le mandrin d'extrusion (2) et la bague emporte-pièce (3) sont réglables indépendamment les uns des autres dans la direction de la butée (5), et
- dans lequel le dispositif de compression (6) présente une bague de centrage (1), en particulier à plusieurs parties, pour la délimitation du diamètre du roulé formé, en particulier du roulé de pâte, forme bague de moulage pour le contour externe de la partie de masse, en particulier du morceau de pâte (20),
**caractérisé en ce que** le dispositif de moulage est réalisé pour exécuter le procédé selon l'une quelconque des revendications 1 à 5.

7. Dispositif de moulage (10) selon la revendication 6, **caractérisé en ce que** la bague de centrage (1) est réalisée en une ou plusieurs parties, en particulier en deux parties, dans lequel la bague de centrage (1) peut être réglée en continu entre un état ouvert et un état fermé, dans lequel à l'état ouvert de la bague de centrage (1) les parties de la bague de centrage (1) sont à distance les unes des autres dans une direction transversale à la direction de réglage du piston de compression (4) ou présentent une distance inférieure que dans l'état ouvert et dans lequel les parties de la bague de centrage (1) sont adjacentes les unes avec les autres dans l'état fermé et forment une bague de moulage pour le contour externe de la portion de masse, en particulier du morceau de pâte (20).

8. Dispositif de moulage (10) selon l'une quelconque des revendications 6 ou 7, **caractérisé en ce que** la bague de centrage (1), le mandrin d'extrusion (2), la bague emporte-pièce (3) et le piston de compression (4) sont disposés concentriquement les uns par rapport aux autres, en particulier dans l'axe de l'évidement (41) du piston de compression (4).

9. Dispositif de moulage (10) selon l'une quelconque des revendications 6 ou 8, **caractérisé en ce que** la butée (5) est réalisée en tant que bande transporteuse (51), sur laquelle le morceau de pâte (20) peut être transporté, dans lequel le dispositif de compression (6), la bague de centrage (1), le mandrin d'extrusion (2), la bague emporte-pièce (3) et le piston de compression (4) sont mobiles dans la direction de mouvement de la bande de transport à la vitesse de la bande de transport (51).

10. Dispositif de moulage (10) selon l'une quelconque des revendications 6 à 9, **caractérisé en ce que** la butée (5) est réalisée en tant que bande transporteuse (51), baguette de transport ou tasse à pression ou une pluralité de baguettes de transport, tasses à pression ou en tant que tambour de transport.

11. Dispositif de moulage (10) selon l'une quelconque des revendications 6 à 10, **caractérisé en ce que** la bague de centrage (1) est mobile avec le piston de compression (4) le long de la direction de mouvement de celui-ci, en particulier avec le piston de compression (4).

12. Dispositif de moulage (10) selon l'une quelconque des revendications 6 à 11, **caractérisé en ce que** le long de la longueur et/ou de la largeur de la butée (5), en particulier le long de la longueur et/ou de la largeur de la bande transporteuse (51), une pluralité de dispositifs de compression (6) réalisés respectivement de manière similaire sont disposés.

13. Dispositif de moulage (10) selon l'une quelconque des revendications 6 à 12, **caractérisé en ce que** le dispositif de moulage (10) présente un piston principal (31) qui est mobile, en particulier de manière transversale, par rapport à la butée (5) dans une direction de compression, dans lequel le dispositif de compression (6) est disposé au niveau du piston principal (31), dans lequel le dispositif de moulage (10) présente un support de transport (32) mobile en particulier au niveau de guides ou de rails ou de barres, dans lequel le support de transport (32) est mobile transversalement à la direction de compression du piston principal (31) et/ou le long de la largeur ou de la longueur de la butée (5), et dans lequel le piston principal (31) est relié au support de transport (32) via des éléments structurels de telle sorte que le piston principal (31) est mobile transversalement à la direction de compression du piston principal (31) et/ou le long de la largeur ou de la longueur de la butée (5) avec le support de transport.

14. Dispositif de moulage (10) selon la revendication 13, **caractérisé en ce que** le piston principal (31) est disposé de manière coulissante via des guides, des rails et/ou des barres (33) au niveau du support de transport (32) dans la direction de compression du piston principal (31), et/ou
**en ce que** le piston principal (31) peut être réglé dans sa direction de compression au niveau de l'entraînement (34) disposé au niveau du support de transport (32), dans lequel le piston principal (31) est relié à l'entraînement (34), en particulier via son entraînement à manivelle (35).

15. Dispositif de moulage (10) selon l'une quelconque des revendications 6 à 14, **caractérisé en ce que** le dispositif de compression (6), la bague de centrage (1), le mandrin d'extrusion (2), la bague emporte-pièce (3) et/ou le piston de compression (4) peuvent être réglés via un commutateur à cames ou de manière électromécanique ou pneumatique ou hydraulique, et/ou
**en ce que** le contour de la bague de centrage (1) et/ou du piston de compression (4) et/ou du mandrin d'extrusion (2) ou de la bague emporte-pièce (3) présente une forme symétrique en rotation, d'étoile, ovale ou d'autres formes.
